# EUROPÄISCHE PATENTSCHRIFT

(11) **EP 1 571 723 B1**
(45) Veröffentlichungstag und Bekanntmachung des Hinweises auf die Patenterteilung: **17.09.2008**
(21) Anmeldenummer: 04005184.9
(22) Anmeldetag: 04.03.2004
(51) Int. Cl.: H01M 8/04, H01M 8/06

(54) **Brennstoffzellenanlage und Verfahren zum Betrieb derselben**
Fuel cell system and process for operating the same
Système de piles à combustible et son procédé d'opération

(43) Veröffentlichungstag der Anmeldung: 07.09.2005
(73) Patentinhaber: SIEMENS AKTIENGESELLSCHAFT, 80333 München (DE)
(72) Erfinder: Bette, Willi, 91056 Erlangen (DE); Stühler, Walter, 96114 Hirschaid (DE)

(56) Entgegenhaltungen:
- EP-A- 0 596 366
- EP-A- 0 716 463
- WO-A-02/27849
- FR-A- 2 816 760
- US-A1- 2003 022 038

## Beschreibung

Die Erfindung betrifft eine Brennstoffzellenanlage gemäß Oberbegriff des Patentanspruchs 1 sowie ein Verfahren zum Betrieb einer Brennstoffzellenanlage gemäß Oberbegriff des Patentanspruchs 7, wobei die Brennstoffzellenanlage ein Brennstoffzellenmodul umfasst. Eine derartige Brennstoffzellenanlage bzw. ein derartiges Verfahren sind z.B. aus der FR 2816760 bekannt. Das Brennstoffzellenmodul besteht insbesondere aus einer Vielzahl von PEM-Brennstoffzellen, und weist mehrere kaskadenartig angeordnete Teilmodule auf, die in Reihe an einer Brenngasversorgung angeschlossen sind.

PEM-Brennstoffzellen werden üblicherweise bei einer Betriebstemperatur <80°C betrieben. Das beim Betrieb der Brennstoffzellen anfallende Reaktionswasser fällt aufgrund dieser niedrigen Betriebstemperatur als flüssiges Wasser sowohl im üblicherweise mit Luft beaufschlagten Kathodengasraum, als auch im beispielsweise mit Wasserstoff beaufschlagten Anodengasraum oder Brenngasraum an. Dieses anfallende Wasser verringert den Wirkungsgrad der Brennstoffzellen und wird daher üblicherweise mit einem Gasüberschuss aus den Brennstoffzellen transportiert. Brenngasseitig ist dies zwangsläufig mit einem Verlust an Brenngas und damit mit einer Minderung des Wirkungsgrades verbunden.

Um diesen Verlust möglichst gering zu halten, besteht die Möglichkeit, eine so genannte Kaskadierung vorzunehmen. Hierbei wird das Brennstoffzellenmodul in mehrere Teilmodule untergliedert, die jeweils aus einem Stapel von Brennstoffzellen bestehen. Das erste Teilmodul wird mit Brenngas-Überschuss beaufschlagt, das überschüssige Brenngas wird anschließend zusammen mit dem in dem Teilmodul anfallenden Wasser über einen nachfolgenden Wasserabscheider dem nächsten Teilmodul wieder zugeführt. Im Wasserabscheider wird zumindest ein Großteil des aus dem ersten Teilmodul mitgetragenen Wassers abgeschieden. Die einzelnen Teilmodule sind im Hinblick auf ihre Größe jeweils dem verbleibenden Volumenstrom des Brenngases angepasst, werden daher zusehends kleiner.

Im letzten Teilmodul sammelt sich das in diesem Teilmodul anfallende Wasser und - je nach Zusammensetzung des verwendeten Brenngases - auch Inertgas an. Dieses wird bei der elektrochemischen Reaktion in den einzelnen Brennstoffzellen abgetrennt und sammelt sich im jeweiligen Restgas der einzelnen Teilmodule an. Aufgrund des Vorliegens von Inertgas ist im letzten Teilmodul der Partialdruck des Brenngases geringer als bei den vorhergehenden Teilmodulen. Hierdurch bedingt ist auch die erzeugte Zellspannung geringer. Mit zunehmender Betriebsdauer werden zunehmend mehr Inertgase angesammelt, so dass die Spannung und damit die Leistung des letzten Teilmoduls nachlässt.

Durch Spülen des letzten Teilmoduls werden die Inertgase sowie das Wasser aus dem letzten Teilmodul ausgetragen. Hierzu ist allerdings erforderlich, dass das letzte Teilmodul mit Brenngas gespült wird. Insbesondere im Fall von Wasserstoff muss hierbei vermieden werden, dass sich dieses in der Umgebung anreichern kann oder eine Konzentration erreicht, die zu einer Explosionsgefahr führen kann. Vor allem beim Betrieb in einem geschlossenen Raum, wie beispielsweise beim Einsatz einer solchen Brennstoffzellenanlage in einem U-Boot, sind scharfe Grenzwerte für die Wasserstoffkonzentration einzuhalten.

Hierzu kann beispielsweise in dem Raum, in dem die Brennstoffzellenanlage angeordnet ist, eine Einrichtung zur katalytischen Abreaktion des Wasserstoffs, also ein so genannter Rekombinator, vorgesehen sein. Auch kann das Restgas über eine Abluftleitung in die freie Umgebung geführt werden. Schließlich besteht noch die Möglichkeit, erhöhte Wasserstoffkonzentrationen zuzulassen und den Einbauraum der Brennstoffzellenanlage als explosionsgefährdeten Bereich einzustufen und entsprechend auszugestalten. Alle diese Möglichkeiten bedeuten jedoch eine Einschränkung für den Anwendungsbereich einer Brennstoffzellenanlage und sind in der Regel auch mit erhöhten Kosten verbunden.

Aus der FR 2816760 ist bereits eine Brennstoffzellenanlage mit einem Brennstoffzellenmodul bekannt, das einen Brenngasraum sowie einen Kathodengasraum aufweist, wobei der Brenngasraum ausgangsseitig über eine Rückführleitung für ein Restgas mit dem Kathodengasraum verbunden ist und bei der ausgangsseitig nach dem Brennstoffzellenmodul ein Ventil zur Absperrung der Rückführleitung vorhanden ist. Hierdurch wird Wasserstoff-Restgas dem normalen Zuluftstrom der Kathodengasseite zugeführt. Dort reagiert er an einem kathodenseitigen Katalysator mit dem Sauerstoff und wird dadurch beseitigt.

Der Erfindung liegt die Aufgabe zugrunde, eine unzulässige Anreicherung eines explosiven Gases einer Brennstoffzellenanlage zu vermeiden.

Die Aufgabe wird gemäß der Erfindung durch eine Brennstoffzellenanlage mit den Merkmalen des Patentanspruchs 1 gelöst. Vorzugsweise weist das Brennstoffzellenmodul hierbei mehrere kaskadenartig angeordnete Teilmodule auf, die in Reihe an einer Brenngas-Zuleitung angeschlossen sind, wobei der Brenngasraum des letzten Teilmoduls ausgangsseitig an die Rückführleitung angeschlossen ist.

Mit dieser Maßnahme ist der entscheidende Vorteil verbunden, dass insbesondere bei einem aus mehreren Teilmodulen bestehenden Brennstoffzellenmodul ein beim Spülvorgang des letzten Teilmoduls aus diesem austretendes Restgas innerhalb der Brennstoffzellenanlage verbleibt und nicht in die Umgebung austritt. Das im Restgas befindliche Brenngas wird vorzugsweise mit dem normalen Zuluftstrom der Kathodengasseite zugeführt, kommt daher mit dem bei PEM-Brennstoffzellen üblicherweise eingesetzten Platin-Katalysator in Kontakt und reagiert an diesem zusammen mit dem vorhandenen Luftsauerstoff bzw. Sauerstoff thermisch. Der Wasserstoff wird daher im Kathodengasraum "verbrannt". Durch die gemäß Patentanspruch 1 vorgesehene Rückführleitung für das Restgas ist daher ein auf der Brenngasseite vollständig abgasfreier Betrieb der Brennstoffzellenanlage gewährleistet. Es wird daher im regulären Betrieb der Brennstoffzellenanlage kein explosives Gas oder Gasgemisch in die Umgebung abgegeben oder dort angereichert. Daher entfallen die sonst notwendigen Maßnahmen zur Eindämmung des Explosionsrisikos.

Erfindungsgemäß ist ausgangsseitig nach dem letzten Teilmodul ein Ventil zur Absperrung der Rückführleitung vorgesehen. Hierdurch besteht die Möglichkeit, das Teilmodul nur bei Bedarf und von Zeit zu Zeit zu spülen. Dies hat den Vorteil, dass der durch das Spülen verursachte Brenngasverlust möglichst gering gehalten wird, um einen möglichst hohen Wirkungsgrad der Gesamtanlage zu erreichen. Da das Restgas innerhalb der Anlage dem Kathodengasraum wieder zugeführt wird, besteht prinzipiell die Möglichkeit, das letzte Teilmodul permanent oder in regelmäßigen Abständen unabhängig beispielsweise von einem Leistungsabfall des letzten Teilmoduls zu spülen.

Um den Zuluft-Volumenstrom, also allgemein den Volumenstrom des dem Brennstoffzellenmodul zugeführten Kathodengases zu überwachen, ist erfindungsgemäß ein Strömungsmessgerät, insbesondere ein Strömungswächter vorgesehen. Dieser ist derart ausgebildet, dass bei Unterschreiten eines Grenzwertes für den Volumenstrom des Kathodengases ein Signal zum Schließen des Ventils abgegeben wird. Zweckdienlicherweise ist der Grenzwert zugleich die Ansprechschwelle für den Strömungswächter. Der Strömungswächter spricht also erst ab einer vorbestimmten Durchflussmenge an. Er gibt beispielsweise ein Freigabe-Signal an das Ventil ab. Ein Ausbleiben des Freigabe-Signals wird vom Ventil als Schließsignal gewertet und verhindert ein Öffnen des Ventils. Durch diese Ausgestaltung wird gewährleistet, dass das rückgeführte Restgas aus dem letzten Teilmodul sich nicht aufgrund eines zu geringen oder unterbrochenen Zuluftstroms zu einem explosionsfähigen Gemisch aufkonzentrieren kann.

Gemäß einer zweckdienlichen Weiterbildung wird das letzte Teilmodul nur bedarfsweise gespült und zwar dann, wenn das letzte Teilmodul einen vorgegebenen elektrischen Leistungswert unterschreitet, beispielsweise unter einen vorgegebenen Spannungswert abfällt. Hierzu ist bei der Brennstoffzellenanlage vorzugsweise eine Einrichtung zur Erfassung der elektrischen Leistungsdaten des letzten Teilmoduls vorgesehen. Die Einrichtung ist derart ausgebildet, dass bei Unterschreiten eines vorbestimmten Wertes ein Signal zum Öffnen des Ventils abgegeben wird.

Zweckdienlicherweise ist ausgangsseitig nach dem letzten Teilmodul ein Drosselelement zur Begrenzung des Volumenstromes des Restgases angeordnet. Durch die Begrenzung des Volumenstromes wird verhindert, dass ein explosionsfähiges Gemisch in den Kathodengasraum oder in die Zuluftleitung eingebracht wird. Mit einem derartigen Drosselelement ist daher ein Betrieb mit dauernd offenem Ventil oder sogar ein Verzicht auf das Ventil möglich, insbesondere dann, wenn dem Kathodengasraum ein ausreichender Gas-Volumenstrom zugeführt wird.

Zur Erhöhung der Sicherheit ist weiterhin vorzugsweise vorgesehen, dass das Drosselelement derart eingestellt ist, dass der Volumenstrom des Restgases auf einen vorgegebenen Bruchteil des Grenzwerts für den Volumenstrom des Oxidationsgases begrenzt ist. Dieser Bruchteil ist dabei vorzugsweise derart bemessen, dass gewährleistet ist, dass die Wasserstoffkonzentration stets unter der Explosionsgrenze bleibt. Die Explosionsgrenze für Wasserstoff in Luft liegt etwa bei 3-4 % Wasserstoffanteil. Da der Wasserstoff-Anteil im Restgas bei bis zu 80 % und z. T. darüber liegt ist der Volumenstrom des Restgases auf <5% und insbesondere auf etwa 1,5% des Grenzwerts für den Volumenstrom des Kathodengases begrenzt ist.

Bevorzugt ist der Kathodengasraum zumindest des letzten Teilmoduls ausgangsseitig mit der Umgebung verbunden. Das Brennstoffzellenmodul wird also kathodenseitig mit Gasüberschuss betrieben, so dass zusammen mit dem überschüssigen Oxidationsgas auch die über das Restgas und die Rückführleitung in den Kathodengasraum eingetragenen Inertgase in die Umgebung austreten.

Zweckdienlicherweise ist weiterhin vorgesehen, dass die einzelnen Teilmodule jeweils parallel an einer Kathodengas-Zuleitung angeschlossen sind. Jedes der Teilmodule wird dabei insbesondere mit unverbrauchter Umgebungsluft gespeist. Im Vergleich zu in Reihe geschalteten Modulen hat dies den Vorteil, dass die nachfolgenden Module nicht mit dem im vorhergehenden Modul angefallenen Reaktionswasser belastet werden bzw. dass für das Kathodengas keine Wasserabscheider notwendig sind.

Die Aufgabe wird gemäß der Erfindung weiterhin gelöst durch ein Verfahren zum Betrieb einer Brennstoffzellenanlage mit einem Brennstoffzellenmodul, wobei zumindest ein Teil des Brennstoffzellenmoduls von Zeit zu Zeit gespült und ein Restgas eines Brenngasraumes des Brennstoffzellenmoduls über eine Rückführleitung einem Kathodengasraum des Brennstoffzellenmoduls zugeführt wird und wobei der Volumenstrom des dem Brennstoffzellenmodul zugeführten Kathodengases überwacht wird und bei Unterschreiten eines Grenzwertes für den Volumenstrom eine Zufuhr von Restgas zu dem Kathodengasraum verhindert wird. Vorzugsweise werden mehrere kaskadenartig angeordnete Teilmodule des Brennstoffzellenmoduls in Reihe nacheinander mit einem Brenngas versorgt, wobei das letzte Teilmodul zumindest von Zeit zu Zeit gespült und sein Restgas dem Kathodengasraum des Brennstoffzellenmoduls zugeführt wird.

Die im Hinblick auf die Brennstoffzellenanlage angeführten Vorteile und bevorzugten Ausführungsformen sind sinngemäß auch auf das Verfahren anzuwenden.

Von besonderem Vorteil ist, wenn das im Restgas enthaltene Brenngas im Kathodengasraum vollständig verbraucht wird, so dass die Brennstoffzellenanlage brenngasseitig vollständig abgasfrei betrieben wird.

Ein Ausführungsbeispiel der Erfindung wird anhand der Zeichnung näher erläutert. Es zeigen jeweils in schematischen und vereinfachten Blockbild-Darstellungen:
- FIG 1: eine Brennstoffzellenanlage und
- FIG 2: eine vergrößerte Darstellung einer Brennstoffzellenanlage im Bereich deren Brennstoffzellenmoduls.

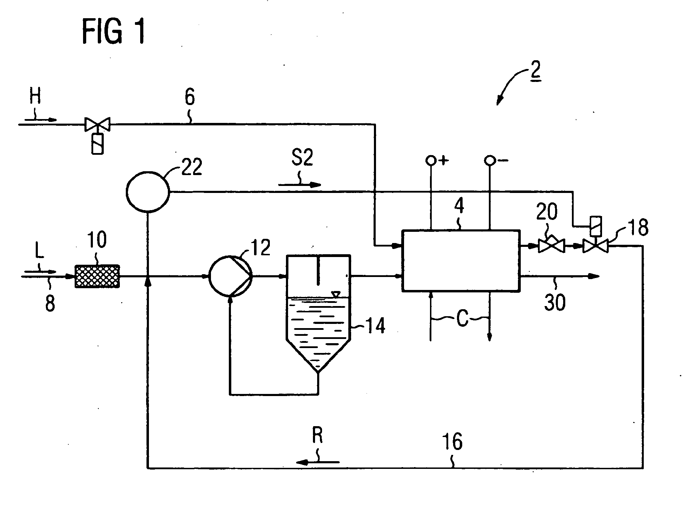

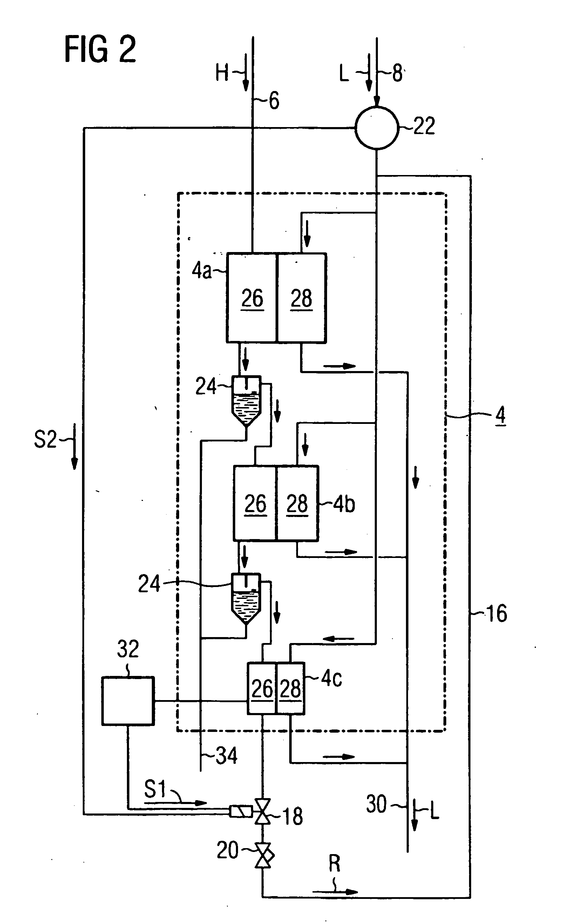

Eine Brennstoffzellenanlage 2 gemäß den FIG 1 und 2 umfasst ein Brennstoffzellenmodul 4, dem über eine Brenngas-Zuleitung ein Brenngas H, insbesondere Wasserstoff, und über eine Kathodengas-Zuleitung (Zuluftleitung 8) ein Oxidationsgas, insbesondere Umgebungsluft L, zugeführt wird. Die Umgebungsluft L wird vor ihrem Eintritt in das Brennstoffzellenmodul 4 durch einen Filter 10 geführt und über eine insbesondere als Flüssigkeitsringpumpe ausgebildete Pumpe 12 gefördert. Der Pumpe 12 nachgeordnet ist eine zur Pumpe 12 gehörige Einrichtung zur Wasserabscheidung 14. In dieser wird das von der Pumpe 12 verdichtete Gas von der ebenfalls mit ausgestoßenen Betriebsflüssigkeit der Flüssigkeitsringpumpe getrennt. Die Betriebsflüssigkeit wird in einem Kreislauf der Flüssigkeitsringpumpe 12 wieder zugeführt. Ein Teil der zugeführten Umgebungsluft L verlässt das Brennstoffzellenmodul 4 ausgangsseitig wieder. Das Brennstoffzellenmodul 4 wird weiterhin mit Kühlwasser C gekühlt. Hierzu ist üblicherweise ein Kühlwasserkreislauf vorgesehen.

Für das Brenngas H ist ausgangsseitig des Brennstoffzellenmoduls 4 eine Rückführleitung 16 vorgesehen, welche die Brenngasseite des Brennstoffzellenmoduls 4 ausgangsseitig mit der Zuluftversorgung, also mit der Zuluftleitung 8, verbindet. In dieser Rückführleitung 16 sind ein Ventil 18 sowie ein Drosselelement 20 angeordnet. Weiterhin ist ein als Strömungswächter ausgebildetes Messgerät 22 für die Messung oder Überwachung des Volumenstroms der Umgebungsluft L in der Zuluftleitung 8 vorgesehen. Abweichend von der im Ausführungsbeispiel vorgesehenen Verwendung von Luftsauerstoff als Oxidationsgas kann auch reiner Sauerstoff oder mit Sauerstoff angereicherte Luft dem Brennstoffzellenmodul 4 zugeführt werden.

Der nähere Aufbau, Betrieb und die Wirkungsweise der Brennstoffzellenanlage 2 werden im Folgenden anhand der FIG 2 näher erläutert. Wie hieraus zu entnehmen ist, weist das Brennstoffzellenmodul 4 mehrere Teilmodule 4a - 4c auf, die kaskadenförmig nacheinander angeordnet sind. Bezüglich der Brenngas-Zuleitung 6 sind sie in Reihe hintereinander geschaltet, wobei jeweils zwei Teilmodulen 4a - 4c jeweils ein Wasserabscheider 24 angeordnet ist. Die einzelnen Teilmodule 4a - 4c sind unterteilt in einen Brenngas- oder Anodengasraum 26 und einen Kathodengasraum 28. Durch den Brenngasraum 26 wird das Brenngas H und durch den Kathodengasraum 28 wird im Ausführungsbeispiel die Umgebungsluft L geleitet. Im Ausführungsbeispiel ist im Unterschied zu der Brenngasseite die Umgebungsluft L den einzelnen Teilmodulen 4a - 4c jeweils parallel zugeführt. Jedes Teilmodul 4a - 4c wird hierbei mit Luftüberschuss betrieben und die überschüssige Luft wird über eine gemeinsame Abluftleitung 30 an die Umgebung der Brennstoffzellenanlage 2 abgegeben.

Weiterhin ist eine Einrichtung 32 zur Erfassung der elektrischen Leistungsdaten des letzten Teilmoduls vorgesehen. Ebenso wie der Strömungswächter 22 ist auch diese Einrichtung 32 derart ausgebildet, dass sie ein Stellsignal an ein Stellelement des Ventils 18 abgeben kann.

Die einzelnen Teilmodule 4a - 4c sind im Ausführungsbeispiel jeweils als PEM-Brennstoffzellenstapel gebildet, wobei das letzte Teilmodul 4c auch aus einer einzelnen PEM-Brennstoffzelle bestehen kann.

Beim Betrieb der Anlage wird zunächst dem ersten Teilmodul 4a Brenngas H im Überschuss zugeführt. Das überschüssige Brenngas H verlässt das Teilmodul 4a und gelangt in den ersten Wasserabscheider 24. Aufgrund der niedrigen Betriebstemperatur der PEM-Brennstoffzellen <80°C fällt Wasser an, welches im Wasserabscheider 24 von dem verbleibenden Restgas (Brenngas mit Inertgasanteilen) abgeschieden wird. Das überschüssige Wasser wird aus dem Wasserabscheider 24 bei Übersteigen einer vorbestimmten Steighöhe bis auf eine minimale Steighöhe über eine Abwasserleitung 34 abgeführt. Das vom Wasser befreite Brenngas H wird anschließend dem nächsten Teilmodul 4b zugeführt und verlässt dieses ebenfalls wieder mit Wasser angereichert. Die einzelnen nacheinander in Reihe angeordneten Teilmodule 4a - 4c sind hierbei auf den jeweiligen Rest-Volumenstrom des Brenngases H im Hinblick auf ihre Ausgestaltung und ihr Volumen angepasst.

Bei einer Brennstoffzellenanlage 2 mit kaskadenartig aufgebautem Brennstoffzellenmodul 4 können eine Vielzahl derartiger Teilmodule 4a - 4c vorgesehen sein. Das letzte Teilmodul 4c, welches auch als Spülzelle oder Spülmodul bezeichnet wird, ist ausgangsseitig mit dem bevorzugt als Magnetventil ausgebildeten Ventil 18 versperrt. Hierdurch bedingt reichern sich im letzten Teilmodul 4c neben dem in diesem Teilmodul 4c anfallenden Wasser auch Inertgase an, welche bei den Reaktionen in den vorangegangenen Teilmodulen 4a - 4c entstanden sind. Durch die Anreicherung der Inertgase verringert sich zusehends der Partialdruck des Brenngases H und somit die vom letzten Teilmodul 4c abgegebene Spannung.

Dieser Spannungsabfall wird von der Einrichtung 32 überwacht und erfasst. Unterschreitet die Spannung des letzten Teilmoduls 4c einen vorgegebenen Wert, so gibt die Einrichtung 32 ein Signal S1 an das Ventil 18, um dieses zu öffnen. Daraufhin wird das letzte Teilmodul 4c mit überschüssigem Brenngas H gespült, so dass das im letzten Teilmodul 4c befindliche Wasser sowie die darin angeordneten Inertgase austreten. Über die Rückführleitung 16 wird dieses Restgas R der Zuluftleitung 8 zugeführt, so dass das Restgas R dem Brennstoffzellenmodul 4 kathodengasseitig wieder zugeführt wird. Das im Restgas R befindliche Brenngas H reagiert innerhalb der einzelnen Brennstoffzellen bei Anwesenheit eines Katalysators thermisch, das heißt der Brennstoff wird vollständig abgebaut. Bei einer PEM-Brennstoffzelle ist üblicherweise ein Platin-Katylsator im Einsatz, welcher diese thermische Reaktion oder thermische Verbrennung des Brenngases unterstützt. Durch diese Maßnahme ist der Betrieb der Brennstoffzellenanlage 2 brenngasseitig vollkommen abgasfrei.

Im Hinblick auf sicherheitstechnische Anforderungen und um auf alle Fälle auszuschließen, dass ein explosionsfähiges Gemisch zugeführt wird, sind neben dem Ventil 18 noch das Drosselelement 20 und der Strömungswächter 22 vorgesehen. Der Strömungswächter 22 überwacht und kontrolliert den Gasstrom in der Zuluftleitung 8. Bei Überschreiten einer bestimmten Gasmenge pro Zeiteinheit, also bei Überschreiten eines vorbestimmten Volumenstroms, spricht der Strömungswächter an und gibt ein Signal S2 an das Ventil 18 weiter, welches vorliegen muss, damit das Ventil 18 öffnet. Umgekehrt wird das Ventil 18 zwangsweise geschlossen, wenn das Signal S2 am Strömungswächter 22 nicht anliegt. Denn in diesem Fall wird keine oder nur eine unzureichende Gasmenge zugeführt, so dass unter Umständen ein explosionsfähiges Gasgemisch entstehen könnte. Das Ventil 18 wird daher im Ausführungsbeispiel nur dann geöffnet, wenn sowohl das Signal S1 von der Einrichtung 26 als auch das Signal S2 vom Strömungswächter 2 am Stellelement des Ventils 18 anliegen.

Das Drosselelement 20 begrenzt weiterhin den Volumenstrom des Restgases R, wodurch zusätzlich die Sicherheit erhöht und das Entstehen eines explosionsfähigen Gemisches vermieden wird. Durch die Begrenzung des Restgas-Stroms auf einen vordefinierten Wert ist nämlich ausgeschlossen, dass selbst bei geringen Zuluft-Strömen eine überhöhte Wasserstoff-Konzentration vorliegt. Das Dosierelement 20 begrenzt hierbei den maximal zulässigen Gasstrom auf beispielsweise 1,5% des Volumenstroms, bei dem der Strömungswächter 22 anspricht.

## Patentansprüche

1. Brennstoffzellenanlage (2) mit einem Brennstoffzellenmodul (4), das einen Brenngasraum (26) sowie einen Kathodengasraum (28) aufweist, wobei der Brenngasraum (26) ausgangsseitig über eine Rückführleitung (16) für ein Restgas (R) mit dem Kathodengasraum (28) verbunden ist und bei der ausgangsseitig nach dem Brennstoffzellenmodul (4) ein Ventil (18) zur Absperrung der Rückführleitung (16) angeordnet ist, **gekennzeichnet durch** ein Strömungsmessgerät (22) zur Überwachung des dem Brennstoffzellenmodul (4) zugeführten,Kathodengases (L), das derart ausgebildet ist, dass bei Unterschreiten eines Grenzwerts für den Volumenstrom des Kathodengases (L) ein Öffnen des Ventils (18) verhindert wird.

2. Brennstoffzellenanlage (2) nach Anspruch 1, bei der das Brennstoffzellenmodul (4) mehrere kaskadenartig angeordnete Teilmodule (4a - 4c) aufweist, die in Reihe an einer Brenngas-Zuleitung (6) angeschlossen sind, wobei der Brenngasraum (26) des letzten Teilmoduls (4c) über die Rückführleitung (16) mit dem Kathodengasraum (28) verbunden ist.

3. Brennstoffzellenanlage (2) nach einem der vorhergehenden Ansprüche mit einer Einrichtung (32) zur Erfassung der elektrischen Leistungsdaten insbesondere eines letzten Teilmoduls (4c) des Brennstoffzellenmoduls (4), die derart ausgebildet ist, dass bei Unterschreiten eines vorgegebenen elektrischen Leistungswerts ein Signal (S1) zum Öffnen des Ventils (18) abgegeben wird.

4. Brennstoffzellenanlage (2) nach einem der vorhergehenden Ansprüche, bei der ausgangsseitig nach dem Brennstoffzellenmodul (4) ein Drosselelement (20) zur Begrenzung des Volumenstromes des Restgases (R) angeordnet ist.

5. Brennstoffzellenanlage (2) nach einem der vorhergehenden Ansprüche, bei der der Kathodengasraum (28) ausgangsseitig mit der Umgebung verbunden ist.

6. Brennstoffzellenanlage (2) nach einem der Ansprüche 2 bis 5, bei der die Teilmodule (4a - 4c) parallel an einer Kathodengas-Zuleitung (8) angeschlossen sind.

7. Verfahren zum Betrieb einer Brennstoffzellenanlage (2) mit einem Brennstoffzellenmodul (4), wobei zumindest ein Teil des Brennstoffzellenmoduls (4) zumindest von Zeit zu Zeit gespült und ein Restgas (R) eines Brenngasraumes (26) des Brennstoffzellenmoduls (4) über eine Rückführleitung (16) einem Kathodengasraum (28) des Brennstoffzellenmoduls (4) zugeführt wird, **dadurch gekennzeichnet, dass** der Volumenstrom des dem Brennstoffzellenmodul (4) zugeführten Kathodengases (L) durch ein Strömungsmessgerät (22) überwacht wird und bei Unterschreiten eines Grenzwertes für den Volumenstrom eine Zufuhr von Restgas (R) zu dem Kathodengasraum (28) durch ein Ventil (18) verhindert wird.

8. Verfahren nach Anspruch 7, bei dem mehrere kaskadenartig angeordnete Teilmodule (4a - 4c) des Brennstoffzellenmoduls (4)in Reihe nacheinander mit einem Brenngas (H) versorgt werden und das letzte Teilmodul (4c) zumindest von Zeit zu Zeit gespült und sein Restgas (R) dem Kathodengasraum (28) zugeführt wird.

9. Verfahren nach Anspruch 7 oder 8, bei dem das im Restgas (R) enthaltene Brenngas (H) im Kathodengasraum (28) vollständig verbraucht wird, so dass die Brennstoffzellenanlage (2) brenngasseitig vollständig abgasfrei betrieben wird.

10. Verfahren nach einem der Ansprüche 7 bis 9, bei dem der Volumenstrom des Restgases (R) auf einen vorgegebenen Bruchteil des Grenzwerts für den Volumenstrom des Kathodengases (L) begrenzt ist.

11. Verfahren nach Anspruch 10, bei dem der Volumenstrom des Restgases (R) derart begrenzt ist, dass eine untere Explosionsgrenze für das im Restgas (R) enthaltene Brenngas (H) im Volumenstrom des Kathodengases (L) unterschritten wird, insbesondere um etwa 50 % unterschritten wird.

## Claims

1. Fuel cell unit (2) having a fuel cell module (4) which has a combustion gas space (26) and a cathode gas space (28), wherein the combustion gas space (26) is connected at the outlet end to the cathode gas space (28) via a recirculation line (16) for a residual gas (R), and in which a valve (18) for shutting off the recirculation line (16) is arranged on the outlet end downstream of the fuel cell module (4), **characterized by** a flow measuring device (22) for monitoring the cathode gas (L) which is fed to the fuel cell module (4), which flow measuring device (22) is embodied in such a way that the valve (18) is prevented from opening if the volume flow rate of the cathode gas (L) drops below a limiting value.

2. Fuel cell unit (2) according to Claim 1, in which the fuel cell module (4) has a plurality of component modules (4a-4c) which are arranged in the manner of a cascade and which are connected in series to a combustion gas feed line (6), wherein the combustion gas space (26) of the last component module (4c) is connected to the cathode gas space (28) via the recirculation line (16).

3. Fuel cell unit (2) according to one of the preceding claims having a device (32) for sensing the electrical power data, in particular a last component module (4c) of the fuel cell module (4), which is embodied in such a way that a signal (S1) for opening the valve (18) is emitted if the power drops below a predefined electrical power value.

4. Fuel cell unit (2) according to one of the preceding claims, in which a throttle element (20) for limiting the volume flow rate of the residual gas (R) is arranged at the outlet end downstream of the fuel cell module (4).

5. Fuel cell unit (2) according to one of the preceding claims, in which the cathode gas space (28) is connected at the outlet end to the surroundings.

6. Fuel cell unit (2) according to one of Claims 2 to 5, in which the component modules (4a-4c) are connected in parallel to a cathode gas feed line (8).

7. Method for operating a fuel cell unit (2) having a fuel cell module (4), wherein at least part of the fuel cell module (4) is rinsed at least from time to time, and a residual gas (R) of a combustion gas space (26) of the fuel cell module (4) is fed to a cathode gas space (28) of the fuel cell module (4) via a recirculation line (16), **characterized in that** the volume flow rate of the cathode gas (L) which is fed to the fuel cell module (4) is monitored by a flow measuring device (22), and a valve (18) prevents residual gas (R) from being fed to the cathode gas space (28) if the volume flow rate drops below a limiting value.

8. Method according to Claim 7, in which a plurality of component modules (4a-4c), arranged in the manner of a cascade, of the fuel cell module (4) are supplied with a combustion gas (H) in succession, and the last component module (4c) is rinsed at least from time to time and its residual gas (R) is fed to the cathode gas space (28).

9. Method according to Claim 7 or 8, in which the combustion gas (H) which is contained in the residual gas (R) is completely consumed in the cathode gas space (28), with the result that the fuel cell unit (2) is operated completely free of exhaust gas at the combustion gas end.

10. Method according to one of Claims 7 to 9, in which the volume flow rate of the residual gas (R) is limited to a predefined fraction of the limiting value for the volume flow rate of the cathode gas (L).

11. Method as claimed in Claim 10, in which the volume flow rate of the residual gas (R) is limited in such a way that a lower explosion limit for the combustion gas (H) contained in the residual gas (R), in the volume flow of the cathode gas (L), is undershot, in particular is undershot by approximately 50%.

## Revendications

1. Installation ( 2 ) de piles à combustible ayant un module ( 4 ) de pile à combustible, qui a une chambre ( 26 ) pour du gaz combustible ainsi qu'une chambre ( 28 ) pour du gaz de cathode, la chambre ( 26 ) pour du gaz combustible communiquant du côté de la sortie par un conduit ( 16 ) de retour d'un gaz ( R ) résiduel avec la chambre ( 28 ) pour du gaz de cathode et dans laquelle, du côté de la sortie, est disposée, après le module ( 4 ) de pile à combustible, une vanne ( 18 ) d'obturation du conduit ( 16 ) de retour, **caractérisée par** un appareil ( 22 ) de mesure du courant pour contrôler le gaz ( L ) de cathode envoyé au module ( 4 ) de pile à combustible et constitué de sorte que, si l'on passe en dessous d'une valeur limite du courant en volume du gaz ( L ) de cathode, une ouverture de la vanne ( 18 )est empêchée.

2. Installation ( 2 ) de piles à combustible suivant la revendication 1, dans laquelle le module ( 4 ) de pile à combustible a plusieurs sous-modules ( 4a à 4c ) disposés en cascade et raccordés en série à un conduit d'apport ( 6 ) de gaz combustible, la chambre ( 26 ) pour du gaz combustible du dernier sous-module ( 4c ) communiquant par le conduit ( 16 ) de retour avec la chambre ( 28 ) pour du gaz de cathode.

3. Installation ( 2 ) de piles à combustible suivant l'une des revendications précédentes, comprenant un dispositif ( 32 ) de relevé de données électriques de puissance, notamment d'un dernier sous-module ( 4c ) du module ( 4 ) de pile à combustible, qui est tel que, lorsque l'on passe en dessous d'une valeur de puissance électrique prescrite, un signal ( S1 ) est émis pour ouvrir la vanne ( 18 ).

4. Installation ( 2 ) de piles à combustible suivant l'une des revendications précédentes, dans laquelle, du côté de la sortie après le module ( 4 ) de pile à combustible, est disposé un élément ( 20 ) d'étranglement pour limiter le courant en volume du gaz ( R ) résiduel.

5. Installation ( 2 ) de piles à combustible suivant l'une des revendications précédentes, dans laquelle la chambre ( 28 ) pour du gaz de cathode communique, du côté de la sortie, avec l'atmosphère ambiante.

6. Installation ( 2 ) de piles à combustible suivant l'une des revendications 2 à 5, dans laquelle les sous-modules ( 4a à 4c ) sont raccordés en parallèle à un conduit ( 8 ) d'apport de gaz de cathode.

7. Procédé pour faire fonctionner une installation ( 2 ) de piles à combustible, ayant un module ( 4 ) de pile à combustible, au moins une partie du module ( 4 ) de pile à combustible étant lavée au moins de temps à autre et un gaz ( R ) résiduel d'une chambre ( 26 ) pour du gaz combustible du module ( 4 ) de pile à combustible étant apporté par un conduit ( 16 ) de retour à une chambre ( 28 ) pour du gaz de cathode du module ( 4 ) de pile à combustible, **caractérisé en ce que** l'on contrôle par un appareil ( 22 ) de mesure du courant le courant en volume du gaz ( L ) de cathode apporté au module ( 4 ) de pile à combustible et, lorsqu'il devient inférieur à une valeur limite, on empêche par la vanne ( 18 ) un apport de gaz ( R ) résiduel à la chambre ( 28 ) pour du gaz de cathode.

8. Procédé suivant la revendication 7, dans lequel on alimente en un gaz ( H ) combustible, en série l'un après l'autre, plusieurs sous-modules ( 4a à 4c ) disposés en cascade du module ( 4 ) de pile à combustible et on lave le dernier sous-module ( 4c ) au moins de temps à autre et on envoie son gaz ( R ) résiduel à la chambre ( 28 ) pour du gaz de cathode.

9. Procédé suivant la revendication 7 ou 8, dans lequel on consomme complètement, dans la chambre ( 28 ) pour du gaz de cathode, le gaz ( H ) combustible contenu dans le gaz ( R ) résiduel, de sorte que l'installation ( 2 ) de piles à combustible fonctionne, du côté du gaz combustible, entièrement sans gaz d'échappement.

10. Procédé suivant l'une des revendications 7 à 9, dans lequel on limite le courant en volume du gaz ( R ) résiduel à une fraction prescrite de la valeur limite du courant en volume du gaz ( L ) de cathode.

11. Procédé suivant la revendication 10, dans lequel on limite le courant en volume du gaz ( R ) résiduel de façon à être inférieur à une limite inférieure d'explosion du gaz ( H ) combustible contenu dans le gaz ( R ) résiduel dans le courant en volume du gaz ( L ) de cathode en y étant, notamment, inférieur d'environ 50 %.
